# EUROPÄISCHE PATENTSCHRIFT

(11) **EP 2 163 336 B1**
(45) Veröffentlichungstag und Bekanntmachung des Hinweises auf die Patenterteilung: **20.11.2013**
(21) Anmeldenummer: 09011561.9
(22) Anmeldetag: 09.09.2009
(51) Int. Cl.: B23D 59/00, B27B 9/02

(54) **Handkreissäge**
Hand-held circular saw
Scie circulaire à main

(30) Priorität: 11.09.2008 DE 102008046705
(43) Veröffentlichungstag der Anmeldung: 17.03.2010
(73) Patentinhaber: Mafell AG, 78727 Oberndorf a.N. (DE)
(72) Erfinder: Pfau, Helmut, 72348 Alpirsbach (DE)
(74) Vertreter: Manitz, Finsterwald & Partner GbR

(56) Entgegenhaltungen:
- EP-A1- 1 281 465
- EP-A2- 1 177 868
- WO-A1-96/13362
- DE-A1- 4 227 765
- DE-U- 1 887 935
- GB-A- 2 302 057
- US-A- 5 881 784

## Beschreibung

Die Erfindung betrifft eine Handkreissäge gemäß dem Oberbegriff des Patentanspruchs 1, insbesondere eine Tauchsäge oder Pendelhaubensäge sowie eine Anzeigeeinrichtung gemäß dem Oberbegriff des Patentanspruchs 12. Eine solche Handkreissäge und eine derartige Anzeigeeinrichtung geht beispielsweise aus der DE 1 887 935 U.

Beim Arbeiten mit Handkreissägen kann es je nach deren Ausgestaltung für den Benutzer schwierig sein, die Sägeblattposition zu erkennen, wenn aufgrund der baulichen Gegebenheiten der Kreissäge eine schlechte oder überhaupt keine Sicht auf das Sägeblatt gegeben ist. Mit Sägeblattposition ist hier das vordere Ende und/oder das hintere Ende einer gedachten Schnittlinie zwischen dem Sägeblatt und einer Arbeitsebene gemeint, in welcher während des Sägebetriebs eine Werkstückoberseite liegt. Aufgrund der fehlenden visuellen Kontrolle weiß der Benutzer also nicht, wie weit das Sägeblatt in das Werkstück einschneidet, d.h. der Benutzer kann allenfalls grob abschätzen, wie weit der Schnitt vorne und hinten, d.h. in und entgegen der Sägerichtung, reicht. Problematisch ist dies beispielsweise dann, wenn sich der Benutzer beim Sägen an zuvor erstellten Anrissen oder Markierungen auf der Werkstückoberseite orientieren muss, um beispielsweise in einer Küchenarbeitsplatte eine Spülenöffnung auszusägen. In diesem Fall muss unbedingt vermieden werden, dass über einen auf der Oberseite der Arbeitsplatte angezeichneten Umriss der herzustellenden Spülenöffnung hinaus gesägt wird, da anderenfalls die Arbeitsplatte unbrauchbar wird.

Besonders problematisch ist diese Situation bei Tauchsägen oder Pendelhaubensägen, wenn diese über eine geschlossene Sägeblattabdeckung verfügen, was in der Praxis meistens der Fall ist, da eine derartige Sägeblattabdeckung die Späneabsaugung erleichtert und die Staubentwicklung verringert. Der Nachteil derartiger Sägeblattabdeckungen ist insbesondere die erwähnte schlechte Sicht auf das Sägeblatt bzw. die Sägeblattposition.

Diese Situation ist vor allem dann besonders problematisch, wenn an der Handkreissäge unterschiedliche Schnitttiefen einstellbar sind, da bei einer Änderung der Schnitttiefe die Länge des Schnittes und damit die Positionen des vorderen Endes und des hinteren Endes der erwähnten gedachten Schnittlinie entsprechend variieren. Bei Tauchsägen mit geschlossener Sägeblattabdeckung ist also die Sägeblattposition nicht nur für den Benutzer nicht einsehbar, sondern die Sägeblattposition variiert außerdem in Abhängigkeit von der jeweils eingestellten Schnitttiefe.

Es besteht das Bestreben, für Handkreissägen eine sichere und zuverlässige Möglichkeit zur Ausführung exakter Schnitte zu sorgen, wobei insbesondere diese Möglichkeit auch bei Tauchsägen oder Pendelhaubensägen gegeben sein soll, bei denen insbesondere aufgrund einer geschlossenen Sägeblattabdeckung keine oder lediglich eine schlechte Sicht auf das Sägeblatt gegeben und so die Sägeblattposition nicht direkt sichtbar ist.

Zu diesem Zweck kann eine Handkreissäge mit einer Anzeigeeinrichtung versehen sein, welche die Position des vorderen Endes und/oder des hinteren Endes einer gedachten Schnittlinie zwischen dem Sägeblatt und einer Arbeitsebene, in welcher während des Sägebetriebs eine Werkstückoberseite liegt, für einen Benutzer von außen sichtbar anzeigt.

Somit ist der Benutzer nicht länger auf eine unmittelbare Sicht auf das Sägeblatt bzw. das vordere Ende und/oder das hintere Ende der erwähnten Schnittlinie angewiesen. Vielmehr werden mittels der Anzeigeeinrichtung diese Positionen gewissermaßen an Stellen übertragen bzw. auf Stellen abgebildet, die vom Benutzer unmittelbar einsehbar sind. Der Benutzer erhält durch diese indirekte Methode Informationen über die tatsächliche Sägeblattposition.

Dadurch ist sichergestellt, dass der Benutzer sich nicht "versägt", d.h. nicht zu weit sägt oder die Säge zu weit vorne oder hinten an dem Werkstück ansetzt.

Die EP-A-1177868 offenbart eine Miniaturhandkreissäge, bei welcher die Schnitttiefe über eine Einstellschraube eingestellt werden kann. An der zugehörigen Anlageplatte, welche gleichzeitig eine Abdeckung für das Sägeblatt bildet, sind Markierungen angebracht, welche das vordere und das hintere Ende des Sägeblatts im Bereich der Anlagefläche für unterschiedliche Schnitttiefen anzeigen.

In der WO-A-96/13362 ist eine Miniaturhandkreissäge offenbart, bei welcher an der Außenseite der Anlageplatte vertikale Striche vorgesehen sind. Zwei am feststehenden Teil des Gehäuses dargestellte Kreisbögen wirken mit den Strichen zusammen, um die Lage des Sägeblatts kenntlich zu machen. An den Schnittpunkten zwischen dem betreffenden Bogen und den vertikalen Linien kann ein Benutzer die Eintauchpunkte des Sägeblatts in die Werkstückoberfläche ablesen.

Die US-A-5 881 784 offenbart ein Nutfräswerkzeug mit einer auf ein Brett aufzulegenden Anlageplatte. Ein um eine vertikale Achse rotierender Scheibenfräser wird dann von der Seite aus in das Brett eingetaucht, um so eine Nut zu fräsen. An der Oberseite der Anlageplatte sind Markierungen angebracht, um die Nutlänge für einen Benutzer von außen sichtbar zu machen.

Bei der in der DE-A-42 27 765 offenbarten Handsäge ist ein Ausreißschutz vorgesehen, der sich bei einer Tiefenverstellung des Sägeblatts mit diesem mitbewegt.

Die EP-A-1 281 465 offenbart eine Pendelhaubensäge mit einer integrierten Leuchte und an der Grundplatte vorgesehenen Maßstäben.

Die GB-A-2 302 057 offenbart eine Handkreissäge mit einem transparenten Fenster an der Vorderseite der Sägeblattabdeckung.

Es ist eine Aufgabe der Erfindung, die Anzeige der Sägeblattposition bei Handkreissägen weiter zu verbessern.

Die Lösung der Aufgabe erfolgt durch die Merkmale des Anspruchs 1 sowie durch eine Anzeigeeinrichtung gemäß dem Anspruch 12.

Erfindungsgemäß weist die Anzeigeeinrichtung wenigstens einen für einen Benutzer von außen sichtbaren Zeiger auf, der die Position des vorderen Endes und/oder des hinteren Endes der Schnittlinie anzeigt. Bevorzugt ist für das vordere Ende der Schnittlinie und das hintere Ende der Schnittlinie jeweils ein eigener Zeiger vorgesehen.

Für den Zeiger ist erfindungsgemäß eine Mehrzahl von Rastpositionen vorgesehen, die jeweils einer einstellbaren Schnitttiefe entsprechen und an denen der Zeiger bei einer Veränderung seiner Position jeweils einrastet. Hierdurch kann dem Umstand Rechnung getragen werden, dass in der Praxis häufig die Schnitttiefe nicht stufenlos einstellbar ist, sondern diskrete Schnitttiefeneinstellungen vorgegeben sind, und zwar insbesondere solche, die in der Praxis häufig benötigt werden.

Bevorzugt ist die Anzeigeinrichtung derart ausgebildet, dass die Position des vorderen Endes und/ oder des hinteren Endes der Schnittlinie im Wesentlichen unmittelbar auf oder im Bereich oder in der Nähe der Werkstückoberseite angezeigt wird, wenn die Handkreissäge ihre bestimmungsgemäße Arbeitslage auf dem Werkstück einnimmt. Der Benutzer kann folglich die Handkreissäge exakt an vorhandenen Anrissen oder Markierungen auf der Werkstückoberseite ausrichten bzw. auf zuverlässige und sichere Weise die Handkreissäge bezüglich derartiger Anrisse/Markierungen so bewegen, dass sichergestellt ist, dass nicht über die durch die Anrisse/Markierungen definierten Grenzen hinaus gesägt wird.

Vorzugsweise ist die Schnitttiefe des Sägeblatts verstellbar und die Anzeigeeinrichtung derart ausgebildet, dass die Anzeigeeinrichtung die in Abhängigkeit von der jeweils eingestellten Schnitttiefe variierende Position des vorderen Endes und/oder des hinteren Endes der Schnittlinie anzeigt. Die mit der Schnitttiefe variierenden Positionen der Schnittlinie, also deren Anfangspunkt und Endpunkt, können folglich entsprechend der sich ändernden Schnitttiefe variiert werden.

Bevorzugt ist die Anzeigeeinrichtung verstellbar ausgebildet. Das Verstellen der Anzeigeeinrichtung kann manuell erfolgen, wobei es abweichend hiervon aber auch möglich ist, eine automatische Verstellung der Anzeigeeinrichtung zu realisieren. Hierbei können insbesondere eine Einrichtung zum Verstellen der Schnitttiefe einerseits und die Anzeigeeinrichtung andererseits derart, z.B. mechanisch, miteinander gekoppelt sein, dass die Anzeigeeinrichtung automatisch entsprechend der jeweiligen Schnitttiefe verstellt wird. Eine manuelle Verstellbarkeit der Anzeigeeinrichtung dagegen hat den Vorteil, dass sie sich auf besonders einfache und kostengünstige Weise realisieren lässt.

Insbesondere ist die Position des Zeigers an der Handkreissäge veränderbar. Durch Verstellen des Zeigers kann eine Anpassung an eine jeweils eingestellte Schnitttiefe vorgenommen werden. Wenn zwei Zeiger vorhanden sind, dann können diese unabhängig voneinander verstellbar sein, wobei aber auch denkbar ist, die beiden Zeiger in geeigneter Weise miteinander zu koppeln, so dass eine Verstellung des einen Zeigers automatisch eine entsprechende Verstellung des anderen Zeigers mit sich bringt.

Bevorzugt umfasst die Anzeigeeinrichtung einen an der Handkreissäge angebrachten oder anbringbaren Träger, relativ zu welchem der Zeiger bewegbar ist. Die Anbringung des Trägers an der Handkreissäge und die Anbringung und Bewegbarkeit des Zeigers an bzw. relativ zum Träger sind dabei auf die für die jeweilige Handkreissäge spezifischen Positionen abgestimmt, die sich jeweils für das vordere Ende und/oder das hintere Ende der erwähnten Schnittlinie ergeben, und zwar gegebenenfalls in Abhängigkeit von einer jeweils eingestellten, veränderbaren Schnitttiefe.

Das Verstellen des Zeigers erfolgt insbesondere parallel zu der Schnittlinie.

Gemäß einem weiteren Ausführungsbeispiel der Erfindung kann dem Zeiger eine Anzeige zugeordnet sein, mittels welcher die der jeweiligen Schnitttiefe entsprechende Position des Zeigers ermittelbar oder ablesbar ist. Die Anzeige kann grundsätzlich beliebig ausgestaltet sein. In einer besonders einfachen und gleichzeitig benutzerfreundlichen Ausgestaltung umfasst die Anzeige eine Skala, die eine Mehrzahl von Markierungen für den Zeiger aufweist, welche jeweils einer einstellbaren Schnitttiefe entsprechen. Prinzipiell denkbar wäre auch eine elektronische Anzeige, auf der Zahlen oder andere Symbole dargestellt werden können, die sich bei einer Verstellung des Zeigers verändern und jeweils eine Schnitttiefe anzeigen, die der Position des Zeigers entspricht. Auf diese Weise kann der Benutzer für eine jeweils gewünschte Schnitttiefe die entsprechende Position des Zeigers an der Kreissäge eindeutig auffinden.

In einer weiteren bevorzugten Ausgestaltung der Erfindung ist die Anzeigeeinrichtung zur Anpassung an die Höhe der Arbeitsebene in Bezug auf die Handkreissäge in einer Richtung senkrecht zur Schnittlinie verstellbar. Die Arbeitsebene ändert ihre Lage in Bezug auf die Handkreissäge dann, wenn die Handkreissäge dazu ausgelegt ist, sowohl mit als auch ohne eine Führungsschiene oder eine wie auch immer geartete andere Auflageeinrichtung verwendet zu werden. Die Änderung der Positionen des vorderen Endes und des hinteren Endes der Schnittlinie (bei unveränderter Schnitttiefeneinstellung) bei einer Änderung der Höhe der Arbeitsebene kann auf diese Weise kompensiert werden.

Des Weiteren kann vorgesehen sein, dass die Anzeigeeinrichtung eine separat handhabbare Baugruppe ist, die insbesondere lösbar an der Handkreissäge angebracht oder anbringbar ist. Hierdurch ist es möglich, die Anzeigeeinrichtung derart auszugestalten, dass bereits vorhandene Handkreissägen mit einer erfindungsgemäßen Anzeigeeinrichtung nachrüstbar sind.

Ferner kann vorgesehen sein, dass die Handkreissäge zur Ausführung von Schräg- oder Gehrungsschnitten ein das Sägeblatt umfassendes Schwenkteil aufweist, welches relativ zu einem Basisteil verschwenkbar ist, wobei die Anzeigeeinrichtung an dem Schwenkteil angebracht oder anbringbar ist. Die Anzeigeeinrichtung kann im an dem Schwenkteil angebrachten Zustand bewegbar, insbesondere verschwenkbar oder klappbar, sein, um in eine nicht störende Stellung überführt werden zu können, wenn dies aufgrund der Ausgestaltung der Handkreissäge und/oder der jeweiligen Anwendung erforderlich ist.

Die Erfindung betrifft außerdem eine Anzeigeeinrichtung gemäß dem Anspruch 12 für eine ein Sägeblatt aufweisende Handkreissäge, insbesondere Tauchsäge oder Pendelhaubensäge, wobei die Anzeigeeinrichtung derart an der Handkreissäge anbringbar ist, dass die Anzeigeeinrichtung die Position des vorderen Endes und/oder des hinteren Endes einer gedachten Schnittlinie zwischen dem Sägeblatt und einer Arbeitsebene, in welcher während des Sägebetriebs eine Werkstückoberseite liegt, für einen Benutzer von außen sichtbar anzeigt. Erfindungsgemäß ist hierbei vorgesehen, dass die Anzeigeeinrichtung wenigstens einen für einen Benutzer von außen sichtbaren Zeiger aufweist, der die Position des vorderen Endes und/oder des hinteren Endes der Schnittlinie anzeigt, wobei für den Zeiger eine Mehrzahl von Rastpositionen vorgesehen ist, die jeweils einer einstellbaren Schnitttiefe entsprechen und an denen der Zeiger bei einer Veränderung seiner Position jeweils einrastet.

Diese Anzeigeeinrichtung weist insbesondere wenigstens eines derjenigen Merkmale auf, die vorstehend in Bezug auf die Anzeigeeinrichtung erläutert worden oder nachstehend erwähnt sind.

Für den Benutzer ist es besonders komfortabel, wenn die Anzeigeeinrichtung sowohl das vordere Ende der Schnittlinie als auch deren hinteres Ende anzeigt. Zwingend ist dies jedoch nicht. Zumindest für bestimmte Anwendungen kann es genügen, wenn lediglich das vordere Ende oder das hintere Ende der Schnittlinie mittels der Anzeigeeinrichtung für den Benutzer angezeigt wird.

Weitere bevorzugte Ausgestaltungen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: eine Seitenansicht einer erfindungsgemäßen Tauchkreissäge, die mit einer erfindungsgemäßen Anzeigeeinrichtung versehen ist, und
- Fig. 2: eine erfindungsgemäße Anzeigeeinrichtung ohne Handkreissäge.

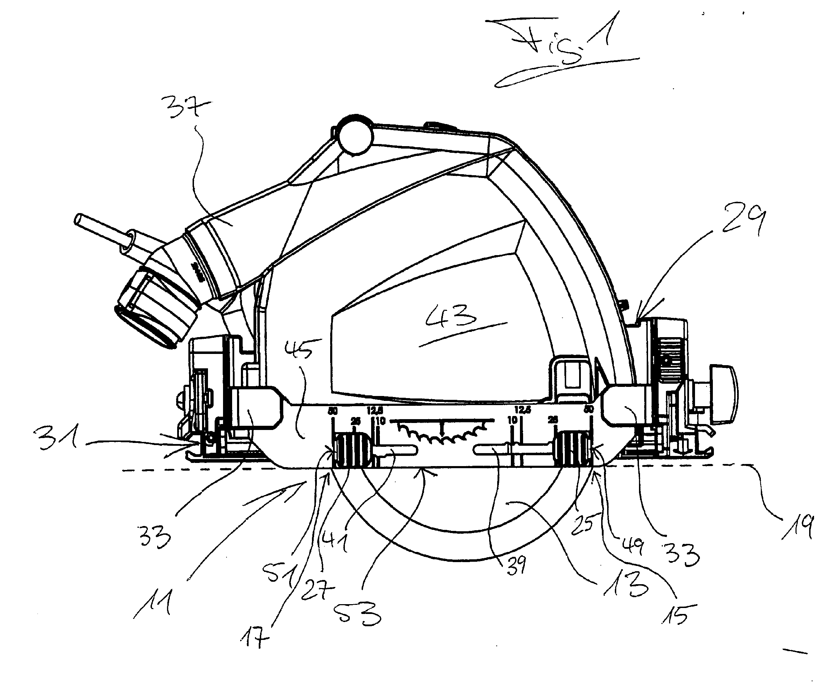

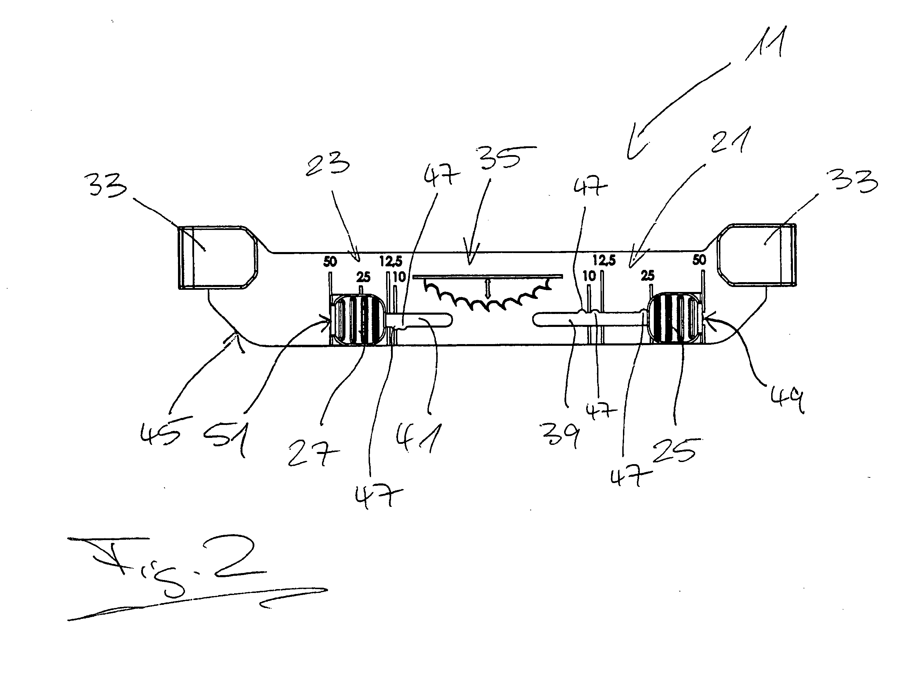

Die erfindungsgemäße Anzeigeeinrichtung 11 umfasst gemäß Fig. 2 einen Träger in Form einer Schiene 45, die beispielsweise aus Metall in Form eines Stanzteils hergestellt ist. In der Schiene 45 sind zwei auf einer gemeinsamen Linie hintereinander angeordnete Schlitze 39, 41 ausgebildet, wobei längs des vorderen Schlitzes 39 ein vorderer Reiter 25 und längs des hinteren Schlitzes 41 ein hinterer Reiter 27 verschiebbar ist. Die Reiter 25, 27 werden im Folgenden ihrer Funktion entsprechend auch als Zeiger bezeichnet. Die Schlitze 39, 41 sind mit kleinen Ausbuchtungen 47 versehen, an denen der betreffende Reiter 25, 27 einrastet, wenn er entsprechend verschoben wird. Diese Rastpositionen entsprechen bestimmten Schnitttiefeneinstellungen einer Handkreissäge (Fig. 1), für welche die Anzeigeeinrichtung 11 vorgesehen ist. Mit den verschiedenen Schnitttiefen korrespondieren Markierungen von Anzeigen 21, 23. Die Anzeigen 21, 23 sind in Form von Skalen vorgesehen, wobei die vordere Skala 21 dem vorderen Reiter 25 und die hintere Skala 23 dem hinteren Reiter 27 zugeordnet ist.

Den Skalen 21, 23 ist zu entnehmen, dass an der betreffenden Handkreissäge Schnitttiefen von 10mm, 12,5mm, 25mm und 50mm einstellbar sind. In Fig. 2 sind die beiden Zeiger 25, 27 jeweils auf eine Schnitttiefe von 50mm eingestellt. Eine vordere Bezugsfläche 49 des vorderen Zeiger 25 und eine hintere Bezugsfläche 51 des hinteren Zeiger 27 zeigen jeweils die Sägeblattposition bei der entsprechenden eingestellten Schnitttiefe an, worauf nachstehend näher eingegangen wird.

Die Schiene 45 ist des Weiteren mit einem Symbol 35 versehen, welches die Funktion der Anzeigeeinrichtung 11 symbolisiert, nämlich eine von außen für den Benutzer sichtbare Anzeige der in Abhängigkeit von der an der Handkreissäge eingestellten Schnitttiefe des Sägeblatts 13 (Fig. 1) variierenden Sägeblattposition bereitzustellen.

An ihrem vorderen und hinteren Ende ist die Schiene 45 außerdem mit Halterungen 33 versehen, die dazu dienen, die Anzeigeeinrichtung 11 in einer oder mehreren definierten Lagen an der Handkreissäge anzubringen.

Die Handkreissäge gemäß Fig. 1 umfasst ein Basisteil 31, das während des Sägebetriebs entweder unmittelbar oder über eine Auflageeinrichtung, beispielsweise eine Führungsschiene, auf einer Werkstückoberseite aufliegt, wobei die Werkstückoberseite einer Arbeitsebene 19 entspricht, die in Fig. 1 durch eine gestrichelte Linie angedeutet ist und parallel zu der Längserstreckung der Schlitze 39, 41 und damit der Verstellrichtung der Zeiger 25, 27 verläuft.

Ein Schwenkteil 29 der Handkreissäge, welches unter anderem das Sägeblatt 13 und eine Sägeblattabdeckung 43 umfasst, ist relativ zum Basisteil 31 verschwenkbar, um Schräg- oder Gehrungsschnitte ausführen zu können. An der Sägeblattabdeckung 43 ist ein Späneabsaugstutzen 37 ausgebildet. Wie eingangs bereits erwähnt, ist der Vorteil einer derartigen geschlossenen Sägeblattabdeckung 43, dass die Späneabsaugung erleichtert und außerdem die Staubentwicklung reduziert wird.

Die erfindungsgemäße Anzeigeeinrichtung 11 ist an dem Schwenkteil 29 und insbesondere an der Sägeblattabdeckung 43 der Kreissäge angebracht. Die Art und Weise der Anbringung der Anzeigeeinrichtung 11 ist grundsätzlich beliebig. Beispielsweise können die Halterungen 33 der Anzeigeeinrichtung 11 mit Aufnahmenocken versehen sein, die mit entsprechenden Halteeinrichtungen, z.B. in Form von Aufnahmebohrungen, am Schwenkteil 29 bzw. an der Sägeblattabdeckung 43 korrespondieren.

Die Halterungen 33 und der Befestigungsbereich an der Sägeblattabdeckung 43 sind derart ausgebildet, dass die Anzeigeeinrichtung 11 in verschiedenen Höhenlagen angebracht werden kann. In jeder Lage der Anzeigeeinrichtung 11 verlaufen die Schlitze 39, 41 für die Zeiger 25, 27 parallel zur Arbeitsebene 19, wobei der senkrechte Abstand der Schlitze 39, 41 zur Arbeitsebene 19 variiert. Hierdurch kann die Lage der Anzeigeeinrichtung 11 und insbesondere die Lage der Schnittpunkte 15, 17 der Bezugsflächen 49, 51 mit der Unterkante 53 der Schiene 45 an die Höhenlage der Arbeitsebene 19 angepasst werden. Die Höhenlage der Arbeitsebene 19 ist insbesondere davon abhängig, ob die Handkreissäge mit oder ohne Auflageeinrichtung, insbesondere Führungsschiene, verwendet wird.

In dem dargestellten Ausführungsbeispiel ist die Handkreissäge derart ausgebildet, dass bei angebrachter Anzeigeeinrichtung 11 die Unterkante 53 der Schiene 45 in der Arbeitsebene 19 liegt, bei in bestimmungsgemäßer Weise auf einem Werkstück aufliegender Handkreissäge also auf der Werkstückoberseite aufliegt bzw. in unmittelbarer Nähe der Werkstückoberseite verläuft. Die Bezugsflächen 49, 51 der Zeiger 25, 27 reichen somit bis unmittelbar an die Arbeitsebene 19 und somit die Werkstückoberseite heran.

Die Positionen 15, 17 der Schnittpunkte der Bezugsflächen 49, 51 mit der Unterkante 53 der Schiene 45 und somit der Arbeitsebene 19 und der Werkstückoberseite entsprechen dem vordersten Bereich bzw. dem hintersten Bereich des Sägeblatts 13 in der Arbeitsebene 19, wenn sich das Sägeblatt 13 in der jeweils eingestellten Schnitttiefenstellung befindet, wie dies Fig. 1 zu entnehmen ist.

Wenn die Handkreissäge auf die Werkstückoberseite aufgesetzt und das Sägeblatt 13 anschließend in das Werkstück bis zur eingestellten Schnitttiefe eingetaucht wird, dann entsteht in dem Werkstück ein Schnitt. Auf der Werkstückoberseite und somit in der Arbeitsebene 19 ist folglich eine Schnittlinie vorhanden, die ein vorderes Ende 15 und ein hinteres Ende 17 in der Werkstückoberseite aufweist. Diese Enden 15, 17 der Schnittlinie werden auch als Sägeblattposition bezeichnet und dem Benutzer mittels der Bezugsflächen 49, 51 der entsprechend eingestellten Zeiger 25, 27 von außen sichtbar angezeigt.

Der Benutzer kann folglich mittels der Zeiger 25, 27 auch ohne unmittelbare Sicht auf das Sägeblatt 13, die ihm aufgrund der Sägeblattabdeckung 43 verwehrt ist, die Sägeblattposition, d.h. das vordere Ende 15 und das hintere Ende 17 der erwähnten Schnittlinie, ermitteln. Eine Änderung der Schnitttiefeneinstellung kann durch eine entsprechende Verstellung der Zeiger 25, 27 unter Zuhilfenahme der Markierungen auf den Skalen 21, 23 berücksichtigt werden.

Die vordere Skala 21 und die hintere Skala 23 sind nicht identisch, d.h. die Abstände der Schnitttiefenmarkierungen untereinander sind für die vordere Skale 21 und die hintere Skala 23 verschieden. Hierdurch wird dem Umstand Rechnung getragen, dass sich das Sägeblatt 13 beim Eintauchen in das Werkstück zur Einnahme der jeweils eingestellten Schnitttiefenstellung nicht senkrecht zur Schnittlinie bewegt, sondern sich auf einer nicht-geradlinigen Bahn bewegt, insbesondere eine Schwenkbewegung ausführt. Die vordere Position 15 und die hintere Position 17 der Schnittlinie variieren also bei einer Änderung der Schnitttiefeneinstellung unterschiedlich. Dies wird durch die entsprechend unterschiedlich ausgebildeten Skalen 21, 23 berücksichtigt.

### Bezugszeichenliste

- 11: Anzeigeeinrichtung
- 13: Sägeblatt
- 15: vorderes Ende der Schnittlinie
- 17: hinteres Ende der Schnittlinie
- 19: Arbeitsebene
- 21: vordere Anzeige, vordere Skala
- 23: hintere Anzeige, hintere Skala
- 25: vorderer Zeiger, vorderer Reiter
- 27: hinterer Zeiger, hinterer Reiter
- 29: Schwenkteil
- 31: Basisteil
- 33: Halterung
- 35: Symbol
- 37: Absaugstutzen
- 39: vorderer Schlitz
- 41: hinterer Schlitz
- 43: Sägeblattabdeckung
- 45: Träger, Schiene
- 47: Ausbuchtung
- 49: vordere Bezugsfläche
- 51: hintere Bezugsfläche
- 53: Unterkante

## Patentansprüche

1. Handkreissäge, insbesondere Tauchsäge oder Pendelhaubensäge, mit einem Sägeblatt (13) und einer Anzeigeeinrichtung (11), welche die Position des vorderen Endes (15) und/oder des hinteren Endes (17) einer gedachten Schnittlinie zwischen dem Sägeblatt (13) und einer Arbeitsebene (19), in welcher während des Sägebetriebs eine Werkstückoberseite liegt, für einen Benutzer von außen sichtbar anzeigt, wobei
die Anzeigeeinrichtung (11) wenigstens einen für einen Benutzer von außen sichtbaren Zeiger (25, 27) aufweist, der die Position des vorderen Endes (15) und/oder des hinteren Endes (17) der Schnittlinie anzeigt, **dadurch gekennzeichnet, daß** für den Zeiger (25, 27) eine Mehrzahl von Rastpositionen vorgesehen ist, die jeweils einer einstellbaren Schnitttiefe entsprechen und an denen der Zeiger (25, 27) bei einer Veränderung seiner Position jeweils einrastet.

2. Handkreissäge nach Anspruch 1,
**dadurch gekennzeichnet,**
**dass** die Schnitttiefe des Sägeblatts (13) verstellbar ist und die Anzeigeeinrichtung (11) die in Abhängigkeit von der jeweils eingestellten Schnitttiefe variierende Position des vorderen Endes (15) und/oder des hinteren Endes (17) der Schnittlinie anzeigt.

3. Handkreissäge nach einem der vorhergehenden Ansprüche,
**dadurch gekennzeichnet,**
**dass** die Anzeigeeinrichtung (11) verstellbar ausgebildet ist, und/ oder dass die Anzeigeeinrichtung (11) manuell verstellbar ist.

4. Handkreissäge nach einem der vorhergehenden Ansprüche,
**dadurch gekennzeichnet,**
**dass** die Anzeigeeinrichtung (11) einen an der Handkreissäge angebrachten oder anbringbaren Träger (45) umfasst, relativ zu welchem der Zeiger (25, 27) bewegbar ist.

5. Handkreissäge nach einem der vorhergehenden Ansprüche,
**dadurch gekennzeichnet,**
**dass** die Position des Zeigers (25, 27) an der Handkreissäge veränderbar ist.

6. Handkreissäge nach einem der vorhergehenden Ansprüche,
**dadurch gekennzeichnet,**
**dass** der Zeiger (25, 27) verschiebbar ist, insbesondere parallel zu der Schnittlinie.

7. Handkreissäge nach einem der vorhergehenden Ansprüche,
**dadurch gekennzeichnet,**
**dass** dem Zeiger (25, 27) eine Anzeige (21, 23) zugeordnet ist, mittels welcher die der jeweiligen Schnitttiefe entsprechende Position des Zeigers (25, 27) ermittelbar ist, wobei insbesondere die Anzeige eine Skala (21, 23) umfasst, die eine Mehrzahl von Markierungen für den Zeiger (25, 27) aufweist, die jeweils einer einstellbaren Schnitttiefe entsprechen.

8. Handkreissäge nach einem der vorhergehenden Ansprüche,
**dadurch gekennzeichnet,**
**dass** die Anzeigeeinrichtung automatisch verstellbar ist, wobei insbesondere eine Einrichtung zum Verstellen der Schnitttiefe und die Anzeigeeinrichtung derart miteinander gekoppelt sind, dass die Anzeigeeinrichtung automatisch entsprechend der jeweils eingestellten Schnitttiefe verstellt wird.

9. Handkreissäge nach einem der vorhergehenden Ansprüche,
**dadurch gekennzeichnet,**
**dass** die Anzeigeeinrichtung (11) zur Anpassung an die Höhe der Arbeitsebene (19) in Bezug auf die Handkreissäge in einer Richtung senkrecht zur Schnittlinie verstellbar ist.

10. Handkreissäge nach einem der vorhergehenden Ansprüche,
**dadurch gekennzeichnet,**
**dass** die Anzeigeeinrichtung (11) eine separat handhabbare Baugruppe ist, die insbesondere lösbar an der Handkreissäge angebracht oder anbringbar ist.

11. Handkreissäge nach einem der vorhergehenden Ansprüche,
**dadurch gekennzeichnet,**
**dass** die Handkreissäge zur Ausführung von Schräg- oder Gehrungsschnitten ein das Sägeblatt umfassendes Schwenkteil (29) aufweist, welches relativ zu einem Basisteil (31) verschwenkbar ist, wobei die Anzeigeeinrichtung (11) an dem Schwenkteil (29) angebracht oder anbringbar ist.

12. Anzeigeeinrichtung für eine ein Sägeblatt (13) aufweisende Handkreissäge, insbesondere Tauchsäge oder Pendelhaubensäge, wobei die Anzeigeeinrichtung (11) derart an der Handkreissäge anbringbar ist, dass die Anzeigeeinrichtung (11) die Position des vorderen Endes (15) und/oder des hinteren Endes (17) einer gedachten Schnittlinie zwischen dem Sägeblatt (13) und einer Arbeitsebene (19), in welcher während des Sägebetriebs eine Werkstückoberseite liegt, für einen Benutzer von außen sichtbar anzeigt, und wobei
die Anzeigeeinrichtung (11) wenigstens einen für einen Benutzer von außen sichtbaren Zeiger (25, 27) aufweist, der die Position des vorderen Endes (15) und/oder des hinteren Endes (17) der Schnittlinie anzeigt, **dadurch gekennzeichnet, daß** für den Zeiger (25, 27) eine Mehrzahl von Rastpositionen vorgesehen ist, die jeweils einer einstellbaren Schnitttiefe entsprechen und an denen der Zeiger (25, 27) bei einer Veränderung seiner Position jeweils einrastet.

13. Anzeigeeinrichtung nach Anspruch 12 und mit den eine Anzeigeeinrichtung (11) betreffenden Merkmalen eines der Ansprüche 2 bis 11.

## Claims

1. A hand-held circular saw, in partiuclar a plunge saw or a pendulum cover saw,
having a saw blade (13) and a display device (11) which indicates, visible from the outside for a user, the position of the front end (15) and/or of the rear end (17) of an imaginary cutting line between the saw blade (13) and a work plane (19) in which an upper workpiece side lies during the saw operation, wherein the display device (11) has at least one indicator (25, 27) which is visible from the outside for a user and which indicates the position of the front end (15) and/or of the rear end (17) of the cutting line,
**characterised in that**
a plurality of latch positions are provided for the indicator (25, 27) which each correspond to a respective adjustable cutting depth and at which the indicator (25, 27) respectively latches on a change of its position

2. A hand-held circular saw in accordance with claim 1, **characterised in that**
the cutting depth of the saw blade (13) is adjustable and the display device (11) displays the position of the front end (15) and/or of the rear end (17) of the cutting line which position varies in dependence on the respectively set cutting depth.

3. A hand-held circular saw in accordance with one of the preceding claims,
**characterised in that**
the display device (11) is made adjustable; and/or **in that** the display device (11) is manually adjustable.

4. A hand-held circular saw in accordance with any one of the preceding claims,
**characterised in that**
the display device (11) comprises a carrier (45) which is attached or can be attached to the hand-held circular saw and relative to which the indicator (25, 27) is movable.

5. A hand-held circular saw in accordance with any one of the preceding claims,
**characterised in that**
the position of the indicator (25, 27) at the hand-held circular saw is variable.

6. A hand-held circular saw in accordance with any one of the preceding claims,
**characterised in that**
the indicator (25, 27) is displaceable, in particular in parallel with the cutting line.

7. A hand-held circular saw in accordance with any one of the preceding claims,
**characterised in that**
the indicator (25, 27) has a display (21, 23) associated with it by means of which the position of the indicator (25, 27) corresponding to the respective cutting depth can be determined, with the display in particular comprising a scale (21, 23) which has a plurality of markings for the indicator (25, 27) which each correspond to an adjustable cutting depth.

8. A hand-held circular saw in accordance with any one of the preceding claims,
**characterised in that**
the display device is automatically adjustable, with in particular a device for adjusting the cutting depth and the display device being coupled to one another such that the display device is automatically adjusted in accordance with the respective set cutting depth.

9. A hand-held circular saw in accordance with any one of the preceding claims,
**characterised in that**
the display device (11) can be adjusted in a direction perpendicular to the cutting line for adaptation to the height of the work plane (19) with respect to the hand-held circular saw.

10. A hand-held circular saw in accordance with any one of the preceding claims,
**characterised in that**
the display device (11) is an assembly which can be handled separately and which is attached or can be attached, in particular releasably, to the hand-held circular saw.

11. A hand-held circular saw in accordance with any one of the preceding claims,
**characterised in that**
the hand-held circular saw has a pivot part (29) for carrying out slanted cuts or mitre cuts which comprises the saw blade and which is pivotable relative to a base part (31), with the display device (11) being attached or being able to be attached to the pivot part (29).

12. A display device for a hand-held circular saw, in particular a plunge saw or a pendulum cover saw, having a saw blade (13),
wherein the display device (11) can be attached to the hand-held circular saw such that the display device (11) indicates, visible from outside for a user, the position of the front end (15) and/or of the rear end (17) of an imaginary cutting line between the saw blade (13) and a work plane (19) in which an upper workpiece side lies during the saw operation; and
wherein the display device (11) has at least one indicator (25, 27) which is visible from the outside for the user and which indicates the position of the front end (15) and/or of the rear end (17) of the cutting line,
**characterized in that**
a plurality of latch positions are provided for the indicator (25, 27) which each correspond to a respective adjustable cutting depth and at which the indicator (25, 27) respectively latches on a change of its position

13. A display device in accordance with claim 12 and having the features of any one of the claims 2 to 11 relating to a display device (11).

## Revendications

1. Scie circulaire portative, en particulier scie plongeante ou scie à cloche pendulaire, comprenant une lame de scie (13) et un dispositif d'affichage (11) qui montre de façon visible de l'extérieur pour un utilisateur la position de l'extrémité antérieure (15) et/ou de l'extrémité postérieure (17) d'une ligne de coupe imaginaire entre la lame de scie (13) et un plan de travail (19) dans lequel se trouve une face supérieure d'une pièce à oeuvrer pendant le fonctionnement de la scie, dans laquelle le dispositif d'affichage (11) comprend au moins un index (25, 27) visible de l'extérieur pour un utilisateur, qui indique la position de l'extrémité antérieure (15) et/ou de l'extrémité postérieure (17) de la ligne de coupe,
**caractérisée en ce qu'**il est prévu pour l'index (25, 27) une pluralité de positions à enclenchement, qui correspondent chacune à une profondeur de coupe réglable, et auxquelles s'enclenche respectivement l'index (25, 27) lors d'une modification de sa position.

2. Scie circulaire portative selon la revendication 1,
**caractérisée en ce que** la profondeur de coupe de la lame de scie (13) est réglable, et le dispositif d'affichage (11) montre la position, qui varie en fonction de la profondeur de coupe respectivement réglée, de l'extrémité antérieure (15) et/ou de l'extrémité postérieure (17) de la ligne de coupe.

3. Scie circulaire portative selon l'une des revendications précédentes,
**caractérisée en ce que** le dispositif d'affichage (11) est réalisé de façon réglable et/ou **en ce que** le dispositif d'affichage (11) est réglable manuellement.

4. Scie circulaire portative selon l'une des revendications précédentes,
**caractérisée en ce que** le dispositif d'affichage (11) comprend un support (45) monté ou susceptible d'être monté sur la scie circulaire, par rapport auquel l'index (25, 27) est déplaçable.

5. Scie circulaire portative selon l'une des revendications précédentes,
**caractérisée en ce que** la position de l'index (25, 27) sur la scie circulaire est modifiable.

6. Scie circulaire portative selon l'une des revendications précédentes,
**caractérisée en ce que** l'index (25, 27) est déplaçable, en particulier parallèlement à la ligne de coupe.

7. Scie circulaire portative selon l'une des revendications précédentes,
**caractérisée en ce qu'**un affichage (21, 23) est associé à l'index (25, 27), au moyen duquel la position de l'index (25, 27) correspondant à la profondeur de coupe respective peut être déterminée, et l'affichage comprend en particulier une échelle (21, 23) qui comporte une pluralité de marquages pour l'index (25, 27), qui correspondent chacun à une profondeur de coupe réglable.

8. Scie circulaire portative selon l'une des revendications précédentes,
**caractérisée en ce que** le dispositif d'affichage est automatiquement réglable, et en particulier un système pour le réglage de la profondeur de coupe et le dispositif d'affichage sont couplés l'un à l'autre de telle façon que le dispositif d'affichage est automatiquement réglé en fonction de la profondeur de coupe respectivement établie.

9. Scie circulaire portative selon l'une des revendications précédentes,
**caractérisée en ce que** le dispositif d'affichage (11) est réglable par référence à la scie circulaire portative dans une direction perpendiculaire à la ligne de coupe pour l'adaptation à la hauteur du plan de travail (19).

10. Scie circulaire portative selon l'une des revendications précédentes,
**caractérisée en ce que** le dispositif d'affichage (11) est un groupe structurel susceptible d'être manipulé séparément, qui est en particulier monté ou susceptible d'être monté de façon détachable sur la scie circulaire portative.

11. Scie circulaire portative selon l'une des revendications précédentes,
**caractérisée en ce que**, pour exécuter des coupes en oblique ou des coupes en onglet, la scie circulaire portative comprend une partie pivotante (29) qui inclut la lame de scie et qui est capable de pivoter par rapport à une partie de base (31), et le dispositif d'affichage (11) est monté ou susceptible d'être monté sur la partie pivotante (29).

12. Dispositif d'affichage pour une scie circulaire portative comportant une lame de scie (13), en particulier scie plongeante ou scie pendulaire à cloche, dans lequel le dispositif d'affichage (11) peut être monté sur la scie circulaire de telle façon que le dispositif d'affichage (11) montre de façon visible de l'extérieur pour un utilisateur la position de l'extrémité antérieure (15) et/ou de l'extrémité postérieure (17) d'une ligne de coupe imaginaire entre la lame de scie (13) et un plan de travail (19) dans lequel se trouve une face supérieure d'une pièce à oeuvrer pendant le fonctionnement de la scie, et dans lequel le dispositif d'affichage (11) comprend au moins un index (25, 27) visible de l'extérieur pour un utilisateur, qui montre la position de l'extrémité antérieure (15) et/ou de l'extrémité postérieure (17) de la ligne de coupe,
**caractérisé en ce qu'**il est prévu pour l'index (25, 27) une pluralité de positions à enclenchement, qui correspondent chacune à une profondeur de coupe établie, et auxquelles l'index (25, 27) s'enclenche respectivement lors d'une modification de sa position.

13. Dispositif d'affichage selon la revendication 12, et comportant les
caractéristiques, concernant un dispositif d'affichage (11), de l'une des revendications 2 à 11.
